# EUROPEAN PATENT SPECIFICATION

(11) **EP 0 418 995 B1**
(45) Date of publication and mention of the grant of the patent: **17.05.1995**
(21) Application number: 90303457.7
(22) Date of filing: 30.03.1990
(51) Int. Cl.: H02J 7/14, H02P 3/18, H02P 3/14, H02P 9/48

(54) **Energy recovery system for motor vehicle**
Energierückgewinnungssystem für Kraftfahrzeugmotor
Système de récupération d'énergie pour moteur de véhicule

(30) Priority: 21.09.1989 JP 246158/89
(43) Date of publication of application: 27.03.1991
(73) Proprietor: Isuzu Motors Limited, Shinagawa-ku, Tokyo 140 (JP)
(72) Inventor: Tsuchiya, Yoshinobu, Fujisawa-shi, Kanagawa (JP); Kurabayashi, Ken, Chigasaki-shi, Kanagawa (JP)
(74) Representative: Flint, Adam

(56) References cited:
- EP-A- 0 031 225
- WO-A-84/03595
- WO-A-86/01653
- WO-A-89/06062
- DE-A- 1 800 047
- FR-A- 2 525 037
- SE-B- 457 589
- SOVIET INVENTIONS ILLUSTRATED, Week 8932, 20 September 1989, Derwent Publications Ltd., London, GB ; Class Q54, AN 89-233301/32 ; & SU-1456 632

## Description

The present invention relates to an energy recovery system for converting braking energy, which is produced when a motor vehicle is braked, into electric energy for efficient recovery thereof.

One motor vehicle energy recovery system is disclosed in Japanese Laid-Open Patent Publication No. 59(1984)-222041. According to the disclosed energy recovery system, a generator is coupled to the drive system of a motor vehicle. When the motor vehicle is braked or decelerated, the generator is operated and electric energy generated by the generator is supplied to charge a battery, so that the braking energy can be converted into electric energy for recovery.

Ordinary batteries for use with the disclosed energy recovery system are poor in charging performance, i.e., they are not efficient when they are charged. Therefore, the electric energy converted from the braking energy cannot efficiently be recovered by these batteries. For example, batteries with their ampere-hour capacity ranging from 50 AH to 70 AH, which are mainly used on normal small-size trucks, are charged with a current ranging from 5 A to 10 A. If such a truck is braked within a time of about 10 seconds, then electric power that can be recovered during the braking period is 14 V x 10 A = 140 W or 1,400 joules, which is not sufficient.

It is an object of the present invention to provide a motor vehicle energy recovery system which can efficiently recover electric energy that is converted from braking energy of a motor vehicle by a generator when the motor vehicle is braked.

DE-A-1800047 discloses a system for regenerative braking in which the recovered energy is stored in a battery.

WO-A-89/06062 discloses a vehicle power supply system which receives its voltage supply from a starter/generator which can be used as a generator in normal operation and as a starter when starting.

SU-A-1456-632 discloses using energy stored in capacitors to assist engine start-up.

According to the present invention, there is provided an energy recovery system in a motor vehicle, the system comprising: a rotary electric machine coupled to a drive system of the motor vehicle; and, detecting means for detecting an operating condition of the motor vehicle; characterised by: capacitor means connected to the rotary electric machine which is coupled to a drive system comprising an engine (1) to drive the vehicle; switch means connected between the capacitor means and the rotary electric machine; control means for operating the switch means based on a detected signal from the detecting means selectively to store energy from the rotary electric machine in the capacitor means during vehicle deceleration and to supply energy from the capacitor means to the rotary electric machine during vehicle acceleration.

The above and other objects, features and advantages of the present invention will become more apparent from the following description when taken in conjunction with the accompanying drawings in which a preferred embodiment of the present invention is shown by way of illustrative example.

In the drawings:
Fig. 1 is a block diagram of a motor vehicle energy recovery system according to an embodiment of the present invention;
Fig. 2 is a diagram showing an energy recovery area during operation of a motor vehicle in which the motor vehicle energy recovery system is incorporated;
Fig. 3 is a block diagram of an electric circuit arrangement of the motor vehicle energy recovery system; and
Fig. 4 is a block diagram of a control circuit in the electric circuit arrangement shown in Fig. 3.

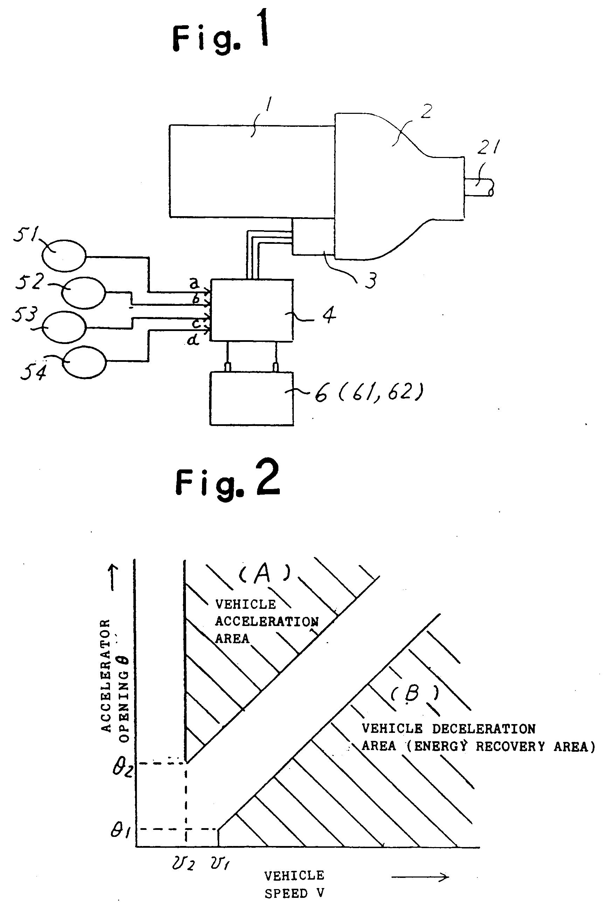

As shown in Fig. 1, the drive torque produced by an engine 1 is transmitted through a transmission 2, an output shaft 21 thereof, and a power transmitting mechanism (not shown) to road wheels (not shown) of a motor vehicle. A rotary electric machine 3, which may operate as a motor or generator, is operatively coupled to the transmission 2, serving as a motor vehicle drive system. The rotary electric machine 3 is controlled in its operation by a controller 4.

The controller 4 has a control circuit shown in Fig. 4, and operates the rotary electric machine 3 as a motor or a generator depending on the operating condition of the motor vehicle. The controller 4 has input terminals a, b, c, d to which there are connected a vehicle speed sensor 51 for detecting the speed at which the motor vehicle runs, an accelerator pedal movement sensor 52 for detecting the amount of depression of an accelerator pedal, an engine coolant temperature sensor 53 for detecting the temperature of an engine coolant, and a brake switch 54 for detecting depression of a brake pedal. In Fig. 4, the control circuit includes an integrator 41, a comparing processor 42, AND gates 43, 44, an OR gate 46, and a comparator 48.

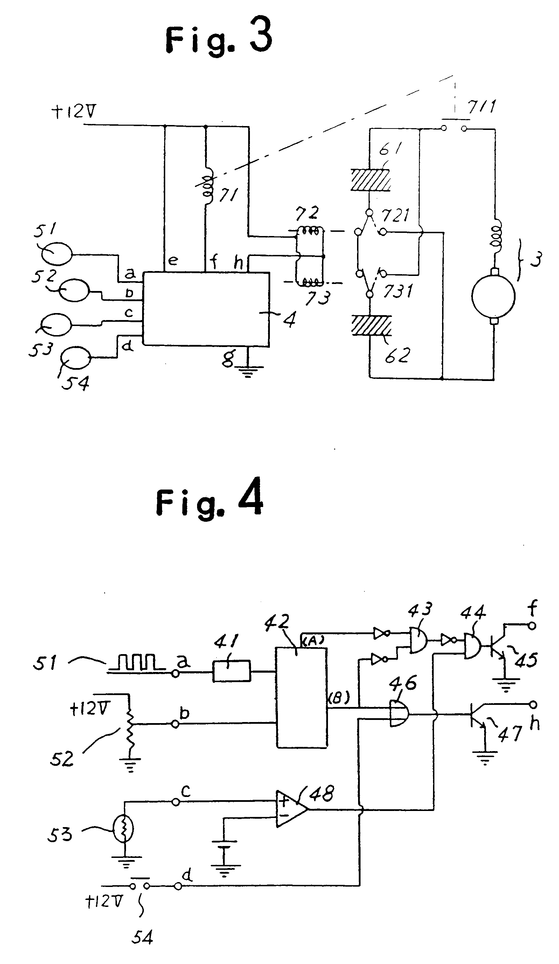

Fig. 3 shows an electric circuit arrangement including the controller 4 and an electric power circuit for the controller 4. Fig. 3 also shows the rotary electric machine 3, a capacitor assembly 6 composed of capacitors 61, 62 of large electrostatic capacitance, and relay circuits 71, 72, 73. When the relay circuits 72, 73 which are connected to an output terminal h of the controller 4 are energized, their contacts 721, 731 are shifted to connect the capacitors 61, 62 parallel to each other. When the relay circuit 71 which is connected to an output terminal f of the controller 4 is energized, its contact 711 is closed to charge the capacitors 61, 62 with regenerated energy from the rotary electric machine 3. When the relay circuits 72, 73 are de-energized, the capacitors 61, 62 are connected in series with each other as indicated by the solid lines in Fig. 3. With the relay contact 711 closed, the electric energies stored in the capacitors 61, 62 are added up to a voltage that is large enough to drive the rotary electric machine 3 as a motor.

Each of the capacitors 61, 62 comprises a wet-type electric double layer capacitor having a dielectric breakdown voltage ranging between 10 and 20 volts, for example, and a large electrostatic capacitance of several hundreds farads (F) or more.

The motor vehicle energy recovery system operates as follows:

If the comparing processor 42 decides that the motor vehicle is in an area A, i.e., the motor vehicle is accelerated, based on signals from the vehicle speed sensor 51 and the accelerator pedal movement sensor 52 which are coupled to the controller 4, then the comparing processor 42 applies a signal through the AND gates 43, 44 and a transistor 45 to the output terminal f. The relay circuit 71 is energized to close the contact 711. The electric energy stored in the capacitors 61, 62 is then supplied to the rotary electric machine 3, which operates as the motor to increase the output torque of the engine.

If the comparing processor 42 decides that the motor vehicle is in an area B (energy recovery area), i.e., the motor vehicle is decelerated, based on signals from the vehicle speed sensor 51, the accelerator pedal movement sensor 52, and the brake switch 52 which are coupled to the controller 4, then the comparing processor 42 applies signals to the output terminals f, h to energize the relay circuits 71, 72, 73. The rotary electric machine 3 now operates as the generator in a regenerative mode with the torque applied from the road wheels of the decelerating motor vehicle. Electric energy generated by the rotary electric machine 3 is charged into the capacitors 61, 62 which are connected parallel to each other.

If the temperature of the engine coolant which is detected by the engine coolant temperature sensor 53 coupled to the controller 4 is lower than a predetermined value, as determined by the comparator 48, the transistor 45 is not turned on through the AND gate 44. Therefore, the relay circuit 71 is not energized, and the engine with the coolant at a low temperature is protected from being overloaded.

With the present invention, when the motor vehicle is decelerated, the rotary electric machine 3 coupled to the motor vehicle drive system operates as a generator to convert mechanical energy, which is produced during the deceleration of the motor vehicle, into electric energy, and the generated electric energy is stored in the electric double layer capacitor assembly 6 which can be charged highly efficiently. Therefore, even when the motor vehicle is decelerated in a short period of time such as about ten seconds, for example, the produced mechanical energy is stored as a sufficiently large amount of electric energy in the capacitor assembly 6. As a consequence, the converted electric energy can efficiently be recovered.

The recovered energy which is stored in the capacitors may be utilized not only to increase the engine output torque while the motor vehicle is running, but also to operate the rotary electric machine as an engine starter when the engine is to be started.

Although a certain preferred embodiment has been shown and described, it should be understood that many changes and modifications may be made therein without departing from the scope of the appended claims.

## Claims

1. An energy recovery system in a motor vehicle, the system comprising:
a rotary electric machine (3) coupled to a drive system (1,2) of the motor vehicle; and,
detecting means (51,52,53,54) for detecting an operating condition of the motor vehicle; characterised by:
capacitor means (6; 61,62) connected to the rotary electric machine (3) which is coupled to a drive system comprising an engine (1) to drive the vehicle;
switch means (71,711; 72,721; 73, 731) connected between the capacitor means (6; 61,62) and the rotary electric machine (3);
control means (4; 42) for operating the switch means based on a detected signal from the detecting means selectively to store energy from the rotary electric machine in the capacitor means during vehicle deceleration and to supply energy from the capacitor means to the rotary electric machine during vehicle acceleration.

2. A system according to claim 1, wherein the capacitor means (6) comprises a plurality of capacitors (61,62), further including selective connecting means (72,73) for selectively connecting the capacitors in series with or parallel to each other with respect to the rotary electric machine, the control means (42) comprising means for controlling the selective connecting means (72,73) to connect the capacitors parallel to each other with respect to the rotary electric machine when the rotary electric machine operates in a regenerative mode, and for controlling the selective connecting means to connect the capacitors in series with each other with respect to the rotary electric machine when the rotary electric machine operates in a motor mode.

## Patentansprüche

1. Energierückgewinnungssystem eines Kraftfahrzeuges, mit:
einer drehenden Elektromaschine (3), die an ein Antriebssystem (1, 2) des Kraftfahrzeuges gekoppelt ist; und
Fühlereinrichtungen (51, 52, 53, 54) zum Ermitteln eines Betriebszustandes des Kraftfahrzeuges; gekennzeichnet durch:
Kondensatoreinrichtungen (6, 61, 62), die mit der drehenden Elektromaschine (3) verbunden sind, welche mit dem Antriebssystem gekoppelt ist, das einen Motor (1) zum Antreiben des Fahrzeuges umfaßt;
Schaltereinrichtungen (71, 711, 72, 721, 73, 731), die zwischen den Kondensatoreinrichtungen (6, 61, 62) und der drehenden Elektromaschine (3) angeschlossen sind; Steuereinrichtungen (4, 42) zum Betreiben der Schaltereinrichtungen, basierend auf ermittelten Signalen der Fühlereinrichtungen, zur selektiven Speicherung der Energie der drehenden Elektromaschine in den Kondensatoreinrichtungen während Fahrzeugverzögerung und zur Einspeisung der Energie der Kondensatoreinrichtungen in die drehende Elektromaschine während Fahrzeugbeschleunigung.

2. System nach Anspruch 1, in welchem die Kondensatoreinrichtung (6) mehrere Kondensatoren (61, 62) umfaßt, desweiteren selektive Verbindungseinrichtungen (72, 73) zum selektiven Verbinden der Kondensatoren in Reihe miteinander oder parallel zueinander bzgl. der drehenden Elektromaschine, wobei die Steuereinrichtungen (42) Einrichtungen zum Steuern der selektiven Verbindungseinrichtungen (72, 73) enthalten, um die Kondensatoren bzgl. der drehenden Elektromaschine parallel zueinander zu verbinden, wenn die drehende Elektromaschine in einer regenerativen Betriebsweise arbeitet, und zum Steuern der selektiven Verbindungseinrichtungen, um die Kondensatoren bzgl. der drehenden Elektromaschine in Reihe miteinander zu verbinden, wenn die drehende Elektromaschine in einer Motorbetriebsweise arbeitet.

## Revendications

1. Ensemble de récupération d'énergie pour véhicule à moteur, l'ensemble comprenant :
une machine électrique rotative (3) couplée à un ensemble d'entraînement (1, 2) d'un véhicule à moteur, et
un dispositif (51, 52, 53, 54) de détection d'un état de fonctionnement du véhicule à moteur, caractérisé par :
un dispositif à condensateurs (6, 61, 62) connecté à la machine électrique rotative (3) qui est couplée à l'ensemble d'entraînement qui comprend un moteur à combustion interne (1) destiné à entraîner le véhicule,
un dispositif à interrupteur (71, 711 ; 72, 721 ; 73, 731) connecté entre le dispositif à condensateurs (6 ; 61, 62) et la machine électrique rotative (3), et
un dispositif de commande (4 ; 42) destiné à commander le dispositif à interrupteur d'après un signal détecté à l'aide du dispositif de détection afin que l'énergie de la machine l'électrique rotative soit sélectivement emmagasinée dans le dispositif à condensateurs pendant la décélération du véhicule et soit transmise par le dispositif à condensateurs à la machine électrique rotative pendant l'accélération du véhicule.

2. Ensemble selon la revendication 1, dans lequel le dispositif (6) à condensateurs comprend plusieurs condensateurs (61, 62), l'ensemble comprenant en outre un dispositif de connexion sélective (72, 73) destiné à connecter sélectivement les condensateurs en série ou en parallèle par rapport à la machine électrique rotative, le dispositif de commande (42) comprenant un dispositif de commande du dispositif de connexion sélective (72, 73) afin que les condensateurs soient connectés en parallèle à la machine électrique rotative lorsque celle-ci fonctionne en mode de récupération, et de commande du dispositif de connexion sélective afin que les condensateurs soient connectés en série par rapport à la machine électrique rotative lorsque celle-ci fonctionne en moteur.
